# EUROPEAN PATENT SPECIFICATION

(11) **EP 3 618 210 B1**
(45) Date of publication and mention of the grant of the patent: **10.05.2023**
(21) Application number: 17907009.9
(22) Date of filing: 28.04.2017
(51) Int. Cl.: H02G 9/00, H02G 15/10, H02G 15/08, H02G 15/14, H02G 15/16, G02B 6/44, H02G 9/12, H02G 1/10, H01R 13/523

(54) **JUNCTION BOX AND OFFSHORE POWER GENERATION SYSTEM USING JUNCTION BOX**
ANSCHLUSSKASTEN UND OFFSHORE-STROMERZEUGUNGSSYSTEM MIT VERWENDUNG DES ANSCHLUSSKASTENS
BOÎTE DE JONCTION ET SYSTÈME DE PRODUCTION D'ÉNERGIE EN MER UTILISANT UNE BOÎTE DE JONCTION

(43) Date of publication of application: 04.03.2020
(73) Proprietor: Zhongtian Technology Marine Systems Co., Ltd., Nantong, Jiangsu 226463 (CN); Jiangsu Zhongtian Technology Co., Ltd., Nantong, Jiangsu 226463 (CN)
(72) Inventor: XUE, Jiping, Nantong Jiangsu 226463 (CN); XUE, Chi, Nantong Jiangsu 226463 (CN); GE, Zhixiao, Nantong Jiangsu 226463 (CN); PAN, Pan, Nantong Jiangsu 226463 (CN); XIE, Shuhong, Nantong Jiangsu 226463 (CN); YANG, Huayong, Nantong Jiangsu 226463 (CN); GUO, Chaoyang, Nantong Jiangsu 226463 (CN); ZHU, Zongjun, Nantong Jiangsu 226463 (CN)
(74) Representative: Zaboliene, Reda
(86) International application number: PCT/CN2017/082346
(87) International publication number: WO 2018/195890

(56) References cited:
- EP-A1- 2 393 220
- EP-A1- 2 793 333
- EP-B1- 2 393 220
- WO-A1-2016/116333
- CA-A1- 2 841 784
- CN-A- 101 335 446
- CN-A- 101 630 826
- CN-A- 101 630 826
- CN-A- 101 882 777
- CN-A- 102 236 128
- CN-U- 205 986 063
- US-A- 3 602 873
- US-A1- 2003 021 556
- US-A1- 2011 131 970

## Description

### FIELD

The subject matter herein generally relates to electrical junction boxes, especially relates to a junction box suitable for use in marine engineering and an offshore power generation system using the junction box.

### BACKGROUND

Offshore oil and gas, wave energy, and dynamic platforms have become widespread. Offshore power generation platforms which are mobile play an important role in the future use of new energy sources, such as wave power generation which uses offshore tidal energy to generate electricity. Long-term operations at sea and in an ocean environment may be problematic for junction boxes to establish reliable connections for cables at sea. Prior art junction boxes include the ones disclosed in US2003/021556A1 and EP2393220A1.

### SUMMARY OF THE INVENTION

In order to solve the above technical problems, the present disclosure provides an electronic junction box having high connection reliability and an offshore power generation system using the electronic junction box. A junction box according to the invention is defined in independent claim 1. Preferred embodiments are defined in dependent claims 2-8.

A junction box comprising: a protecting case; an anchoring device; a cable connector; an optical unit connection box; an optical fiber connector; and an electrical connector; wherein each of the cable connector and the optical unit connection box is received in the protecting case, each of the anchoring device, the optical fiber connector and the electrical connector is mounted on the protecting case.

In one embodiment, the protecting case comprises a main body and a cover fixed to an end of the main body, the anchoring device is fixed at an end of the main body away from the cover, the cable connector and the optical unit connection box are received in the main body, and the optical fiber connector and the electrical connector are mounted on the cover.

According to the invention, the anchoring device comprises a fixing member and two wire passing members connected to the fixing member, the fixing member defines a line channel, each of the two wire passing members defines a wire passing hole.

According to the invention, the fixing member comprises a positioning portion, a protrusion protruding from one end of the positioning portion, and a connecting portion connected to the other end of the positioning portion, the line channel penetrates the positioning portion, the protrusion and the connecting portion.

In one embodiment, the junction box further comprises a fixing plate, the fixing plate is received in the protecting case and is fixed to the cover, the cable connector and the optical unit connection box are mounted on the fixing plate.

In one embodiment, the cable connector comprises a front joint, a rear joint, a sleeve interface, an intermediate joint, a plug head, and a closing head cover, the sleeve interface and the intermediate joint are respectively positioned at both ends of the front joint, the sleeve interface and the intermediate joint are connected by a stud bolt, the intermediate joint and the plug head are respectively disposed at two ends of the rear joint, the intermediate joint and the plug head are connected by the other stud bolt, the closing head cover is sealed at an end of the plug head away from the rear joint.

In one embodiment, the optical unit connection box comprises a disk tray and two fixing members respectively disposed at two ends of the disk tray, the disk tray comprises a disk body and a lid that is covered on the disk body, the fixing member is configured to fix cables, and the disk tray is configured to receive optical fibers.

In one embodiment, the fixing member comprises a fixing head, two sleeves connected to the fixing head, and two sealing members positioned in the two sleeves, the fixing head is fixed to the disk body.
In one embodiment, A offshore power generation system comprising: at least one power generation platform; and above junction box; wherein optical cables of the power generating platform are connected to the optical fiber connector of the junction box, and electronic cables of the power generating platform are connected to the electrical connector, and the cable connector is connected to the electronic cables entering from the anchoring device, and the optical unit connection box is connected the optical cables entering from the anchoring device.

In one embodiment, the power generation platform is a wave energy generator.

The offshore power generation system realizes connection of the one or more power generation platforms through the cable and the junction box to form a chain or mesh power generation system. The anchoring device, the cable connector, the optical unit connection box, the fiber connector, and the electrical connector, ensure high structural and sealing performance of the cables in the junction box.

### BRIEF DESCRIPTION OF THE DRAWINGS

Implementations of the present technology will now be described, by way of embodiments with reference to the attached figures.
FIG. 1 is a schematic view of an offshore power generation system according to an embodiment.
FIG. 2 is an isometric view of a junction box according to an embodiment in the system of FIG. 1.
FIG. 3 is an isometric view of a part of the junction box in FIG. 2.
FIG. 4 is an exploded cross-sectional view of a cable connector according to an embodiment in the junction box.
FIG. 5 is a lateral view of an optical unit connection box according to an embodiment in the junction box.
FIG. 6 is a cross-sectional view of a part of the optical unit connection box in FIG. 5.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. drawings are not necessarily to scale, and the proportions of certain parts may be exaggerated to show details and features of the present disclosure better. The disclosure is by way of embodiments and not by way of limitation in the figures of the accompanying drawings, in which like references indicate similar elements. It should be noted that references to "an" or "one" embodiment in this disclosure are not necessarily to the same embodiment, and such references mean "at least one."

Several definitions that apply throughout this disclosure will now be presented.

The term "substantially" is defined to be essentially conforming to the particular dimension, shape, or other feature that the term modifies, such that the component need not be exact. For example, "substantially cylindrical" means that the object resembles a cylinder, but can have one or more deviations from a true cylinder. The term "comprising," when utilized, means "including, but not necessarily limited to"; it specifically indicates open-ended inclusion or membership in the so-described combination, group, series, and the like. The references "a plurality of" and "a number of" mean "at least two."

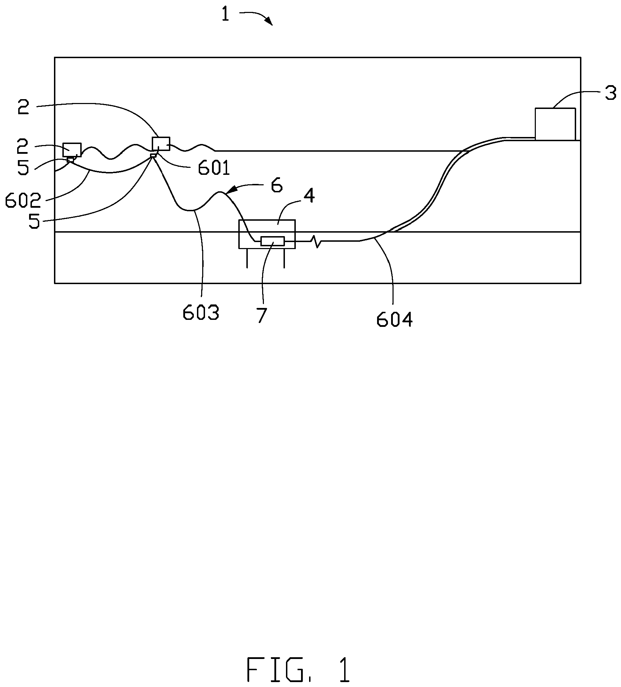

FIG. 1 is a schematic view of an offshore power generation system 1 according to an embodiment. The offshore power generation system 1 includes at least one power generation platform 2 positioned at sea, a base station 3 positioned on the land, a fixing device 4 positioned at the seabed, at least one junction box 5, and a plurality of cables 6. The base station 3 includes a substation. The power generation platform 2 is configured to generate power using marine resources, such as wave energy. The base station 3 is configured to change the voltage of the power generated by the power generation platform 2 to deliver the power onwardly. In the embodiment, the number of the power generating platforms 2 shown in FIG. 1 is two. In other embodiments, the number of the power generating platforms 2 can be one, or three or more, correspondingly, the number of the junction boxes 5 can be one, or two or more. In FIG. 1, the number of the junction boxes 5 is also two. For convenience of description and understanding, the plurality of cables 6 is defined to include a first cable 601, a second cable 602, a third cable 603, and a fourth cable 604. The first cable 601 is connected the power generation platform 2 with corresponding junction box 5. The second cable 602 is a dynamic cable connected between two junction boxes 5. The third cable 603 is a dynamic cable connecting one of the junction boxes 5 and the fourth cable 604. The fourth cable 604 is a static cable connecting the third cable 603 with the base station 3. In the embodiment, the third cable 603 and the fourth cable 604 are connected by a joint 401, and the joint 401 is positioned on the fixing device 4. The fixing device 4 is fixed to the seabed for positioning the junction of the third cable 603 and the fourth cable 604. In the embodiment, the offshore power generation system 1 is a wave power generation system, and accordingly, the power generation platform 2 is a wave energy generator. The first cable 601 is a cable of the generator. The offshore power generation system 1 is not limited to being the wave power generation system, it can be other power generation system that generates power by other means. In the embodiment, the offshore power generation system 1 connects the power generation platforms 2 (i.e., the two generators) in series to form a chain or mesh power generation system.

The offshore power generation system 1 further includes at least one lifting device 7. The at least one lifting device 7 is connected to a power generating platform 2 for moving the offshore power generation system 1. The at least one lifting device 7 can be connected to a body of a generator. Each junction box 5 is mounted on one of the lifting devices 7. In the embodiment, the junction box 5 is fixed to one side of the lifting device 7 by a fixing frame 8, and the junction box 5 and the lifting device 7 are beside each other.

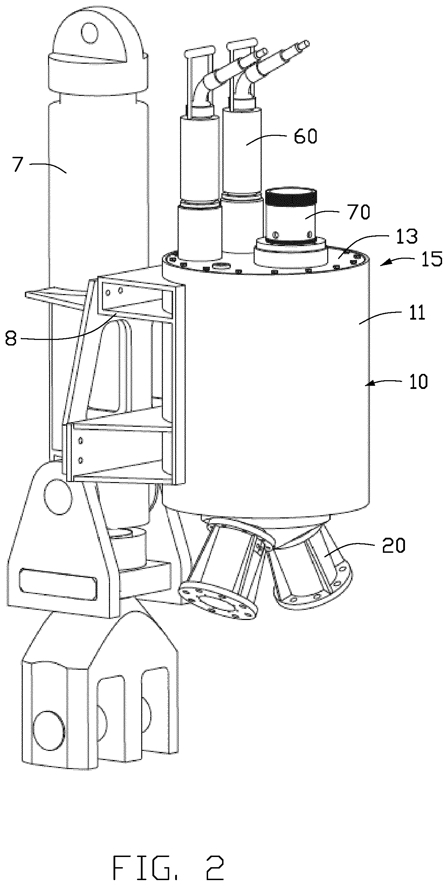

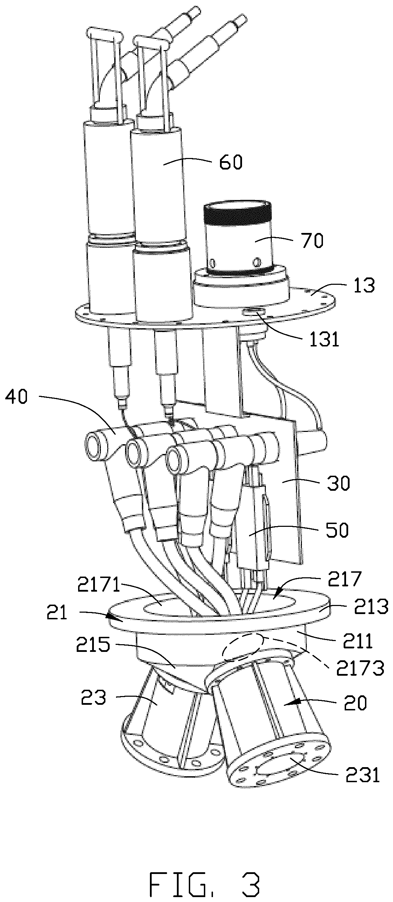

Referring to FIGS. 2 and 3, the junction box 5 includes a protecting case 10, an anchoring device 20, a fixing plate 30, a cable connector 40, an optical unit connection box 50, an optical fiber connector 60, and an electrical connector 70. The protecting case 10 is hollow and accommodates the fixing plate 30, the cable connector 40, and the optical unit connection box 50. The anchoring device 20 is mounted at an end of the protection casing 10 for fixing cables (such as the second cable 602 and the third cable 603). The fixing plate 30 is fixedly positioned in the protecting case 10 for positioning the cable connector 40 and the optical unit connection box 50. The cable connector 40 is fixed to the fixing plate 30 and received in the protecting case 10. The cable connector 40 is a plug-in terminal connector inside the junction box 5 for ensuring power collection, connection, and grounded shielding between the dynamic cable and the power generation platform 2.

The optical unit connection box 50 is fixed to the fixing plate 30 and received in the protective case 10 for ensuring communication between the two power generation platforms 2, the power generation platform 2, and the base station 3. The optical fiber connector 60 is mounted on the protecting case 10, and a part of the optical fiber connector 60 passes through the protecting case 10 to be received in the protecting case 10. The fiber optic connector 60 is an internal communication fiber optic plug connector of the power generation platform 2, and is used for ensuring communication between internal signals of the power generation platform and external control signals. The electrical connector 70 is mounted on the protecting case 10 for ensuring the connection between the internal power of the power generating platform 2 and the junction box. Each component is specifically described.

In the embodiment, the protecting case 10 is a substantially hollow cylinder. The protecting case 10 includes a main body 11 and a cover 13 fixed to an end of the main body 11. The main body 11 is a hollow cylinder which is open at both ends. The cover 13 is a circular plate shape. The cover 13 covers the end of the main body 11. The cover 13 defines a reserved hole 131 for infilling with glue or oil when needed. The anchoring device 20 is fixed to the other end of the main body 11 and covers the other end of the main body 11. Specifically, the anchoring device 20 includes a fixing member 21 and two wire passing members 23 connected to the fixing member 21. The fixing member 21 is substantially disk-shaped and is fixed to the other end of the main body 11. The fixing member 21 includes a positioning portion 211, a protrusion 213 protruding from one end of the positioning portion 211, and a connecting portion 215 connected to the other end of the positioning portion 211. In the embodiment, the positioning portion 211, the protrusion 213, and the connecting portion 215 have an integral structure. The positioning portion 211 is a substantially cylindrical, and the protrusion 213 extends out of the peripheral edge of the end of the positioning portion 211. The connecting portion 215 extends from the other end of the positioning portion 211 along a longitudinal axis. The protrusion 213 is substantially disc shaped. The connecting portion 215 is substantially conical in shape. The fixing member 21 defines a line channel 217 that penetrates the positioning portion 211, the protrusion 213, and the connecting portion 215. The line channel 217 includes a first channel 2171 extending through the positioning portion 211 and the protrusion 213 and two second channels 2173 extending through the connection portion 215. The two second channels 2173 communicate with the first channel 2171 to form an inverted Y-shaped channel. A diameter of the first channel 2171 is larger than a diameter of the second channel 2173. The line channel 217 allows passage for the cables.

The two wire passing members 23 are fixed on the connecting portion 215 of the fixing member 21 and correspond to the two second passages 2173. Each wire passing member 23 defines a wire passing hole 231, and each wire passing hole 231 communicates with the corresponding second channel 2173. In the embodiment, two bundles of cables (such as the second cable 602 and the third cable 603) pass through the through hole 231 and enter the two second channels 2173 to meet in the first channel 2171 and enter the protecting case 10. The cable is fixed and sealed by the anchoring device 20. In other embodiments, the shape of the protecting case 10 is not limited to one shape and may be, for example, a rectangular parallelepiped, a cube, an irregular shape, or the like. In other embodiments, the shape of the anchoring device 20 is not limited, provided that the cable can be fixed and sealed.

The fixing plate 30 is connected to the cover 13 of the protecting case 10 and received in the protecting case 10 for positioning the cable connector 40 and the optical unit connection box 50. In the embodiment, the fixing plate 30 is perpendicular to the cover 13 and offset from the center of the protecting case 10. The number of cable connectors 40 is three, each cable connector 40 passes through the fixing plate 30 to be fixed to the fixing plate 30. The cable connector 40 is configured to connect the cables. For example, after the second cable 602 and the third cable 603 are passed through the anchoring device 20, the cable in the second cable 602 and the cable in the third cable 603 are respectively inserted into the corresponding cable connectors 40. In this embodiment, the second cable 602 includes three cables for insertion into three cable connectors 40. The third cable 603 includes three cables, and the three cables are inserted into three cable connectors 40.

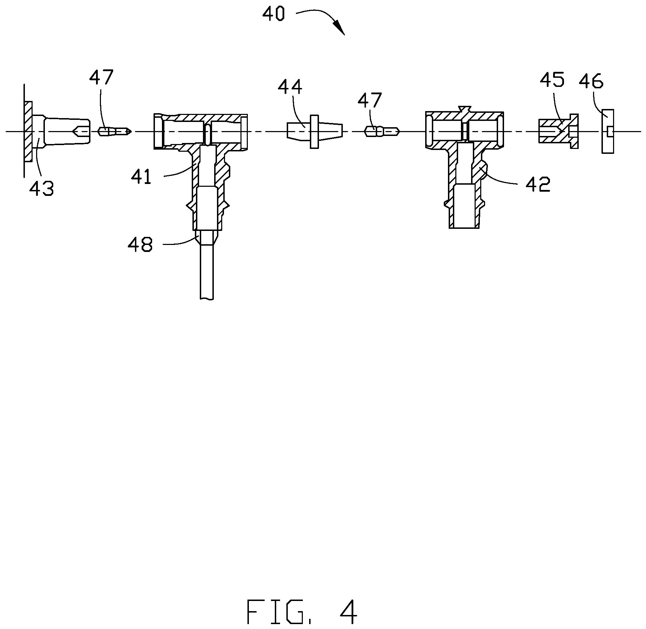

FIG. 4 shows a cable connector 40 according to an embodiment. The cable connector 40 includes a front joint 41, a rear joint 42, a sleeve interface 43, an intermediate joint 44, a plug head 45, a closing head cover 46, and two stud bolts 47. The front joint 41 and the rear joint 42 are substantially T-shaped for inserting the cable. The front joint 41 and the rear joint 42 are further provided with a stress cone 48 for fixing the cable. The sleeve interface 43 and the intermediate joint 44 are positioned at the ends of the front joint 41. The sleeve interface 43 and the intermediate joint 44 are connected by one of the stud bolts 47. The sleeve interface 43 passes through the fixing plate 30. The intermediate joint 44 and the plug head 45 are disposed at the two ends of the rear joint 42. The intermediate joint 44 and the plug head 45 are connected by the other stud bolt 47. The closing head cover 46 is sealed at an end of the plug head 45 away from the rear joint 42. The cable connector 40 allows for insertion of two bundles of cables, for example, one cable of the second cable 602 is inserted into the front joint 41, and one of the third cables 603 is inserted into the rear joint 42. The cable connector 40 can also include a lightning arrestor or lightning guide.

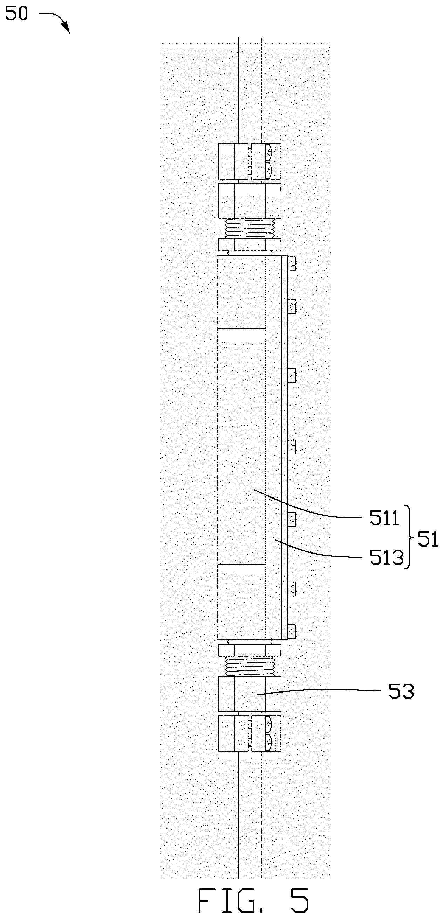

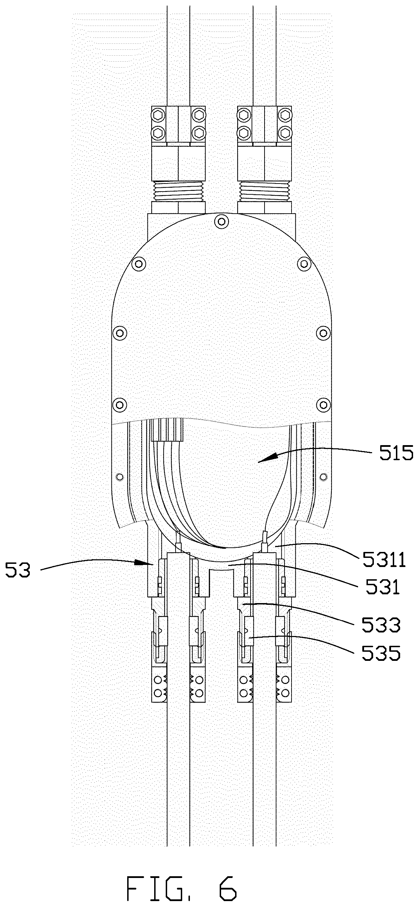

The number of the optical unit connection boxes 50 is at least one, the same being fixed to the fixing plate 30. In the embodiment, the number of the optical unit connection boxes 50 is two, one of the optical unit connection boxes 50 being used as a backup. FIG. 5 and FIG. 6 show an optical unit connection box 50 according to an embodiment. The optical unit connection box 50 includes a disk tray 51 and two fixing members 53 disposed at the two ends of the disk tray 51. The disk tray 51 includes a disk body 511 and a lid 513 that covers the disk body 511. In the embodiment, the disk body 511 has a substantially elliptical cross section and defines a receiving space 515. The lid 513 is a substantially elliptical plate. The lid 513 is fixed to the disk body 511 to cover the receiving space 515. A fixing block 517 for positioning the optical fiber is positioned on the bottom of the disk 511. The fixing block 517 can receive and position the optical fiber by opening a receiving groove. The cable passes through the fixing member 53 at both ends of the disk tray 51 so that the optical fibers in the cable can be fused for onward signal transmission. The fixing member 53 includes a fixing head 531, two sleeves 533 connected to the fixing head 531, and two sealing members 535 positioned in the two sleeves 533. The fixing head 531 is fixed to the end of the disk body 511 and defines two fixing holes 5311. The fixing hole 5311 communicates with the receiving space 515. Two sleeves 533 are inserted into the two fixing holes 5311 of the fixing head 531 and fixed to the fixing head 531. An inner wall of each sleeve 533 defines a receiving groove. The sealing member 535 is annular and received in the receiving groove of the sleeve 533. The sleeve 533 allows the cable to pass through and is sealed by the sealing member 535.

The fiber optic connector 60 is mounted on the cover 13 of the protecting case 10 and partially extends into the protecting case 10. The fiber optic connector 60 can be a connector in prior art for quickly connecting and unplugging the fiber connection. The electrical connector 70 is also mounted on the cover 13 of the protecting case 10 and partially extends into the protecting case 10 for access to the cable.

Taking the junction box 5 which connects the first cable 601, the second cable 602, and the third cable 603 in FIG. 1 as an example, the first cable 601, the second cable 602, and the third cable 603 all include electric cables and optical cables. The electric cable of the power generating platform 2 connects to the electrical connector 70 and enters the protecting case 10 to connect to the cable connector 40. The optical cable of the power generating platform 2 connects to the optical fiber connector 60 and the optical unit connecting box 50. The second cable 602 and the third cable 603 pass through the through hole 231 of the anchoring device 20 to enter the protecting case 10. The electrical cable of the second cable 602 and the electrical cable of the third cable 603 are connected to either the front joint 41 or the rear joint 42. In the embodiment, the number of electrical cables of the second cable 602 and the third cable 603 are in bundles of six. The two bundles are connected with either a front joint 41 or a rear joint 42 of the cable connector 40. Correspondingly, the power generation platform 2 has three electrical cables, respectively connected to the three cable connectors 40, so that the electrical cables of the power generation platform 2 are electrically connected to the electrical cables of the second cable 602 and the third cable 603. The optical cable of the second cable 602 and the optical cable of the third cable 603 are connected to the optical unit connection box 50. The optical cable of the first cable 601 is fused in the disk reel 51 to ensure signal transmission between the power generation platform 2 and other power generation platforms 2 and the base station 3. In other embodiments, the optical cable of the second cable 602 and the optical cable of the third cable 603 may be connected by an optical cable connected between the optical fiber connector 60 and the optical unit connection box 50 instead of being directly connected to the optical cable of the first cable 601. At this time, the optical cable, the second cable 602, and the third cable 603 are fused in the disk tray 51.

The offshore power generation system realizes connection of the one or more power generation platforms through the cable and the junction box to form a chain or mesh power generation system. The anchoring device, the cable connector, the optical unit connection box, the fiber connector, and the electrical connector, ensure high structural and sealing performance of the cables in the junction box. The junction box of the disclosure satisfies the safety load 5T limit working condition 10T by a tensile test, and has no obvious displacement or slippage after being loaded for 5 minutes at the load of 20T. After 1 MPa of pressure held for 24 hours a watertightness test was carried out on the junction box, and no leakage occurred. A pressure test of 3.5 U0 (about 26 kV 5 min) was also passed.

## Claims

1. A junction box (5) comprising:
a protecting case (10);
an anchoring device (20);
a plug-in terminal connector (40);
an optical unit connection box (50);
an optical fiber connector (60); and
an electrical connector (70);
wherein each of the plug-in terminal connector (40) and the optical unit connection box (50) is received in the protecting case (10), each of the anchoring device (20), the optical fiber connector (60) and the electrical connector (70) is mounted on the protecting case (10);
wherein the anchoring device (20) comprises a fixing member (21) and two wire passing members (23) connected to the fixing member (21), the fixing member (21) defines a line channel (217), each of the two wire passing members (23) defines a wire passing holes (231);
wherein the fixing member (21) comprises a positioning portion (211), a protrusion (213) protruding from one end of the positioning portion (211), and a connecting portion (215) connected to the other end of the positioning portion (211), the line channel (217) penetrates the positioning portion (211), the protrusion (213) and the connecting portion (215);
wherein the line channel (217) comprises a first channel (2171) extending through the positioning portion (211) and the protrusion (213), and two second channels (2173) extending through the connecting portion (215);
wherein the two second channels (2173) communicate with the first channel (2171) to form an inverted Y-shaped channel, a diameter of the first channel (217 : being larger than a diameter of the second channel (2173), the line channel (217) allowing passage for the cables,
wherein the two wire passing members (23) are fixed on the connecting portion (215) of the fixing member (21) and correspond to the two second channels (2173), such that each wire passing hole (231) communicates with the corresponding second channel (2173),
wherein two bundles of cables can pass through the wire passing hole (231) and enter the two second channels (2173) to meet in the first channel (2171) and enter the protecting case (10) such that the cables are fixed and sealed by the anchoring device (20).

2. The junction box (5) of claim 1, wherein the protecting case (10) comprises a main body (11) and a cover (13) fixed to an end of the main body (11), the anchoring device (20) is fixed at an end of the main body (11) away from the cover (13), the plug-in terminal connector (40) and the optical unit connection box (50) are received in the main body (11), and the optical fiber connector (60) and the electrical connector (70) are mounted on the cover (13).

3. The junction box of claim 2, wherein the junction box (5) further comprises a fixing plate (30), the fixing plate (30) is received in the protecting case (10) and is fixed to the cover (13), the plug-in terminal connector (40) and the optical unit connection box (50) are mounted on the fixing plate (30).

4. The junction box of claim 1 or claim 3, wherein the plug-in terminal connector (40) comprises a front joint (41), a rear joint (42), a sleeve interface (43), an intermediate joint (44), a plug head (45), and a closing head cover (46), the sleeve interface (43) and the intermediate joint (44) are respectively positioned at both ends of the front joint (41), the sleeve interface (43) and the intermediate joint (44) are connected by a stud bolt (47), the intermediate joint (44) and the plug head (45) are respectively disposed at two ends of the rear joint (42), the intermediate joint (44) and the plug head (45) are connected by the other stud bolt (47), the closing head cover (46) is sealed at an end of the plug head (45) away from the rear joint (42).

5. The junction box of claim 1 or claim 3, wherein the optical unit connection box (50) comprises a disk tray (51) and two fixing members (53) respectively disposed at two ends of the disk tray (51), the disk tray (51) comprises a disk body (511) and a lid (513) that is covered on the disk body (511), the fixing member (53) is configured to fix cables, and the disk tray (51) is configured to receive optical fibers.

6. The junction box of claim 5, wherein the fixing member (53) comprises a fixing head (531), two sleeves (533) connected to the fixing head (531), and two sealing members (535) positioned in the two sleeves (533), the fixing head (531) is fixed to the disk body (511).

7. A offshore power generation system (1) comprising:
at least one power generation platform (2); and
a junction box (5) as claimed in any of the claims 1-6; and
a first cable (601), a second cable (602) and a third cable (603), each comprising optical cables and electric cables, wherein the first cable (601) connects the power generating platform (2) to the junction box (5);
wherein optical cables of the first cable (601) from the power generating platform (2) are connected to the optical fiber connector (60) of the junction box (5), and electronic cables of the first cable (601) form the power generating platform (2) are connected to the electrical connector (70), and the plug-in terminal connector (40) is connected to the electronic cables of the second cable (602) and the third cable (603) entering from the anchoring device (20), and the optical unit connection box (50) is connected the optical cables of the second cable (602) and the third cable (603) entering from the anchoring device (20).

8. The offshore power generation system (1) of claim 7, wherein the power generation platform (2) is a wave energy generator.

## Patentansprüche

1. Verteilerkasten (5), umfassend:
ein Schutzgehäuse (10);
eine Verankerungsvorrichtung (20);
einen Steckverbinder (40);
einen Verbindungskasten für optische Einheiten (50);
einen Lichtleiterverbinder (60); und
einen elektrischen Verbinder (70);
wobei alle Steckverbinder (40) und der Verbindungskasten für optische Einheiten (50) im Schutzgehäuse (10) aufgenommen sind, alle Verankerungsvorrichtungen (20), der Lichtleiterverbinder (60) und der elektrische Verbinder (70) am Schutzgehäuse (10) montiert sind;
wobei die Verankerungsvorrichtung (20) ein Befestigungselement (21) und zwei Leitungsdurchführungselemente (23) umfasst, die mit dem Befestigungselement (21) verbunden sind, wobei das Befestigungselement (21) einen Leitungskanal (217) definiert, und jedes der beiden Leitungsdurchführungselemente (23) Leitungsdurchgangslöcher (231) definieren;
wobei das Befestigungselement (21) einen Positionierabschnitt (211), einen Vorsprung (213), der von einem Ende des Positionierabschnitts (211) vorsteht, und einen Verbindungsabschnitt (213), der mit dem anderen Ende des Positionierabschnitts (211) verbunden ist, umfasst, und der Leitungskanal (217) den Positionierabschnitt (211), den Vorsprung (213) und den Verbindungsabschnitt (215) durchdringt;
wobei der Leitungskanal (217) einen ersten Kanal (2171), der sich durch den Positionierabschnitt (211) und den Vorsprung (213) erstreckt, und zwei zweite Kanäle (2173), die sich durch den Verbindungsabschnitt (215) erstrecken, umfasst;
wobei die zwei zweiten Kanäle (2173) mit dem ersten Kanal (2171) kommunizieren, um einen umgekehrt Y-förmigen Kanal zu bilden, wobei der Durchmesser des ersten Kanals (217) größer als der Durchmesser des zweiten Kanals (2173) ist, und der Leitungskanal (217) den Durchgang für die Kabel ermöglicht,
wobei die zwei Leitungsdurchführungselemente (23) am Verbindungsabschnitt (215) des Befestigungselements (21) befestigt sind und den zwei zweiten Kanälen (2173) entsprechen, so dass jedes Leitungsdurchgangsloch (231) mit dem entsprechenden zweiten Kanal (2173) kommuniziert,
wobei zwei Kabelbündel durch das Leitungsdurchgangsloch (231) durchlaufen und in die zwei zweiten Kanäle (2173) eintreten können, um sich im ersten Kanal (2171) zu treffen und in das Schutzgehäuse (10) einzutreten, so dass die Kabel durch die Verankerungsvorrichtung (20) befestigt und abgedichtet sind.

2. Verteilerkasten (5) nach Anspruch 1, wobei das Schutzgehäuse (10) einen Grundkörper (11) und eine Abdeckung (13), die an einem Ende des Grundkörpers (11) befestigt ist, umfasst, wobei die Verankerungsvorrichtung (20) am von der Abdeckung (13) entfernten Ende des Grundkörpers (11) befestigt ist, der Steckverbinder (40) und der Verbindungskasten für optische Einheiten (50) im Grundkörper (11) aufgenommen sind, und der Lichtleiterverbinder (60) und der elektrische Verbinder (70) an der Abdeckung (13) angebracht sind.

3. Verteilerkasten nach Anspruch 2, wobei der Verteilerkasten (5) ferner eine Befestigungsplatte (30) umfasst, wobei die Befestigungsplatte (30) im Schutzgehäuse (10) aufgenommen und an der Abdeckung (13) befestigt ist, und der Steckverbinder (40) und der Verbindungskasten für optische Einheiten (50) auf der Befestigungsplatte (30) montiert sind.

4. Verteilerkasten nach Anspruch 1 oder Anspruch 3, wobei der Steckverbinder (40) eine vordere Verbindung (41), eine hintere Verbindung (42), eine Hülsenschnittstelle (43), eine Zwischenverbindung (44), einen Stopfen (45) und eine Stopfenabdeckung (46) umfasst, wobei die Hülsenschnittstelle (43) und die Zwischenverbindung (44) jeweils an beiden Enden der vorderen Verbindung (41) positioniert sind, die Hülsenschnittstelle (43) und die Zwischenverbindung (44) durch einen Gewindebolzen (47) verbunden sind, die Zwischenverbindung (44) und der Stopfen (45) jeweils an zwei Enden der hinteren Verbindung (42) angeordnet sind, die Zwischenverbindung (44) und der Stopfen (45) durch einen anderen Gewindebolzen (47) verbunden sind, und die Stopfenabdeckung (46) an dem Ende des Stopfens (45) abgedichtet ist, das der hinteren Verbindung (42) abgewandt ist.

5. Verteilerkasten nach Anspruch 1 oder Anspruch 3, wobei der Verbindungskasten für optische Einheiten (50) eine Plattenablage (51) und zwei Befestigungselemente (53) umfasst, die jeweils an zwei Enden der Plattenablage (51) angeordnet sind, wobei die Plattenablage (51) ein Plattengehäuse (511) und einen Deckel (513), der das Plattengehäuse (511) bedeckt, umfasst, wobei das Befestigungselement (53) konfiguriert ist, um Kabel zu fixieren, und die Plattenablage (51) konfiguriert ist, um Lichtleiterfasern aufzunehmen.

6. Verteilerkasten nach Anspruch 5, wobei das Befestigungselement (53) einen Befestigungskopf (531), zwei Hülsen (533), die mit dem Befestigungskopf (531) verbunden sind, und zwei Dichtungselemente (535), die in den beiden Hülsen (533) positioniert sind, umfasst, wobei der Befestigungskopf (531) am Plattengehäuse (511) befestigt ist.

7. Offshore-Stromerzeugungssystem (1), umfassend:
mindestens eine Stromerzeugungsplattform (2); und
einen Verteilerkasten (5) nach einem der Ansprüche 1-6; und
ein erstes Kabel (601), ein zweites Kabel (602) und ein drittes Kabel (603), die jeweils optische Kabel und elektrische Kabel umfassen, wobei das erste Kabel (601) die Stromerzeugungsplattform (2) mit dem Verteilerkasten (5) verbindet;
wobei die Lichtleiterkabel des ersten Kabels (601) von der Stromerzeugungsplattform (2) mit dem Lichtleiterverbinder (60) des Verteilerkastens (5) verbunden sind, und elektrische Kabel des ersten Kabels (601) von der Stromerzeugungsplattform (2) mit dem elektrischen Verbinder (70) verbunden sind, und der Steckverbinder (40) mit den elektrischen Kabeln des zweiten Kabels (602) und des dritten Kabels (603), die von der Verankerungsvorrichtung (20) eintreten, verbunden sind, und Verbindungskasten für optische Einheiten (50) mit den optischen Kabeln des zweiten Kabels (602) und des dritten Kabels (603), die von der Verankerungsvorrichtung (20) eintreten, verbunden sind.

8. Offshore-Stromerzeugungssystem (1) nach Anspruch 7, wobei die Stromerzeugungsplattform (2) ein Wellenenergiegenerator ist.

## Revendications

1. Boîte de jonction (5) comprenant :
un boîtier de protection (10) ;
un dispositif d'ancrage (20) ;
un connecteur de borne enfichable (40) ;
un boîtier de connexion d'unité optique (50) ;
un connecteur de fibre optique (60) ; et
un connecteur électrique (70) ;
dans laquelle chacun parmi le connecteur de borne enfichable (40) et le boîtier de connexion d'unité optique (50) est reçu dans le boîtier de protection (10), chacun parmi le dispositif d'ancrage (20), le connecteur de fibre optique (60) et le connecteur électrique (70) est monté sur le boîtier de protection (10) ;
dans laquelle le dispositif d'ancrage (20) comprend un élément de fixation (21) et deux éléments de passage de fil (23) reliés à l'élément de fixation (21), l'élément de fixation (21) définit un canal de ligne (217), chacun des deux éléments de passage de fil (23) définissent des trous de passage de fil (231) ;
dans laquelle l'élément de fixation (21) comprend une partie de positionnement (211), une saillie (213) dépassant de l'extrémité de la partie de positionnement (211), et une partie de connexion (215) connectée à l'autre extrémité de la partie de positionnement (211), le canal de ligne (217) pénètre dans la partie de positionnement (211), la saillie (213) et la partie de connexion (215) ;
dans laquelle le canal de ligne (217) comprend un premier canal (2171) s'étendantà travers la partie de positionnement (211) et la saillie (213), et deux seconds canaux (2173) s'étendantà travers la partie de connexion (215) ;
dans lequel les deuxièmes canaux (2173) communiquent avec le premier canal (2171) pour former un canal en forme de Y inversé, un diamètre du premier canal (2171) étant supérieur à un diamètre du deuxième canal (2173), le canal de ligne (217) permettant le passage des câbles,
dans lequel les deux éléments de passage de fil (23) sont fixés sur la partie de connexion (215) de l'élément de fixation (21) et correspondent aux deux deuxièmes canaux (2173), de sorte que chaque trou de passage de fil (231) communique avec le deuxième canal (2173),
dans lequel deux faisceaux de câbles peuvent passer à travers le trou de passage de fil (231) et entrer dans les deux seconds canaux (2173) pour se rencontrer dans le premier canal (2171) et entrer dans le boîtier de protection (10) de sorte que les câbles sont fixés et scellés par le dispositif d'ancrage (20).

2. Boîte de jonction (5) selon la revendication 1, dans laquelle le boîtier de protection (10) comprend un corps principal (11) et un couvercle (13) fixé à une extrémité du corps principal (11), le dispositif d'ancrage (20) est fixé sur une extrémité
du corps principal (11) à distance du couvercle (13), le connecteur de borne enfichable (40) et le boîtier de connexion d'unité optique (50) sont reçus dans le corps principal (11), et le connecteur de fibre optique {60) et le connecteur électrique (70) sont montés sur le couvercle (13).

3. Boîte de jonction selon la revendication 2, dans laquelle la boîte de jonction (5) comprend en outre une plaque de fixation (30), la plaque de fixation (30) est reçue dans le boîtier de protection (10) et est fixée au couvercle (13), le connecteur de borne enfichable (40) et le boîtier de connexion d'unité optique (50) sont montés sur la plaque de fixation (30).

4. Boîte de jonction selon la revendication 1 ou la revendication 3, dans laquelle le connecteur de borne enfichable (40) comprend un joint avant (41), un joint arrière (42), une interface de manchon (43), un joint intermédiaire (44), une tête enfichable (45) et un couvercle de tête de fermeture (46), l'interface de manchon (43) et le joint intermédiaire (44) sont positionnés respectivement aux deux extrémités de l'articulation avant (41), de l'interface de manchon (43) et du joint intermédiaire 44) sont reliés par un goujon (47), le joint intermédiaire (44) et la tête enfichable (45) en arc de cercle disposés respectivement aux deux extrémités du joint arrière (42), le joint intermédiaire (44) et la tête enfichable (45) sont reliés par l'autre goujon (47), le couvercle de tête de fermeture (46) est scellé à une extrémité de la tête enfichable(45) éloignée du joint arrière (42).

5. Boîte de jonction selon la revendication 1 ou la revendication 3, dans laquelle la boîtier de connexion d'unité optique (50) comprend un plateau de disque (51) et deux éléments de fixation (53) respectivement disposés aux deux extrémités du plateau de disque (51), le plateau de disque (51) comprend un corps de disque (511) et un couvercle (513) qui est recouvert sur le corps de disque (511), l'élément de fixation (53) est configuré pour fixer des câbles, et le plateau de disque (51) est configuré pour recevoir des optiques fibres.

6. Boîte de jonction selon la revendication 5, dans laquelle l'élément de fixation (53) comprend une tête de fixation (53 1), deux manchons (533) reliés à la tête de fixation (531), et deux éléments d'étanchéité (535) positionnés dans les deux manchons (533), la tête de fixation (531) est fixée au corps de disque (511).

7. Système de production d'énergie en mer (1) comprenant :
au moins une plate-forme de production d'énergie (2) ; et
une boîte de jonction (5) selon l'une quelconque des revendications 1 à 6 ; et
un premier câble (601), un deuxième câble (602) et un troisième câble (603) comprenant chacun des câbles optiques et des câbles électriques, le premier câble (601) reliant la plate-forme de production d'énergie (2) à la boîte de jonction (5) ;
dans laquelle les câbles optiques du premier câble (601) de la plate-forme de production d'énergie (2) sont connectés au connecteur de fibre optique (60) de la boîte de jonction (5), et les câbles électroniques du premier câble (601) forment la plate-forme de production d'énergie (2) sont connectés au connecteur électrique (70), etle connecteur de borne enfichable (40) est connecté aux câbles électroniques du deuxième câble (602) etle troisième câble (603) entrant depuis le dispositif d'ancrage (20), et le boîtier de connexion d'unité optique (50) est connecté aux câbles optiques du deuxième câble (602) et du troisième câble (603) entrant depuis le dispositif d'ancrage (20).

8. Système de production d'énergie en mer (1) selon la revendication 7, dans laquelle la plate-forme de production d'énergie (2) est un générateur d'énergie houlomotrice.
